# EUROPÄISCHE PATENTANMELDUNG

(11) **EP 1 453 031 A1**
(43) Veröffentlichungstag der Anmeldung: **01.09.2004**
(21) Anmeldenummer: 03100515.0
(22) Anmeldetag: 28.02.2003
(51) Int. Cl.: G09G 3/36, G02F 1/133, G03B 27/00

(54) **Verfahren und Vorrichtung zum Aufbelichten von Bildinformationen auf lichtempfindliches Material**

(71) Anmelder: Agfa-Gevaert AG, 51373 Leverkusen (DE)
(72) Erfinder: Klüter, Ulrich, 80339, München (DE); Hartmann, Thomas, 82449, Uffing/Staffelsee (DE)

(57) **Zusammenfassung**

Die Erfindung geht aus von einem Verfahren zum Aufbelichten von Bildinformationen auf lichtempfindliches Material mit einem LCD (1) bestehend aus wenigstens einem Pixelgenerator (3) zum Erzeugen von Bildpunkten auf dem lichtempfindlichen Material (12) wobei für die zu erzeugenden Bildpunkte eine bestimmte Lichtleistung über die Dauer einer bestimmten Belichtungszeit aufbelichtet wird und wobei jeder Pixelgenerator (3) mit einer Wechselspannung angesteuert wird, die für eine bestimmte Periode eine negative Spannung und für eine weltere gleich lange Periode eine positive Spannung gleicher Amplitude liefert. Erfindungsgemäß wird die Belichtungszeit für jeden Bildpunkt gleichmäßig auf die Perioden negativer und positiver Spannung (15) verteilt.

## Beschreibung

Die Erfindung betrifft ein Verfahren und eine Vorrichtung zum Aufbelichten von Bildinformationen auf lichtempfindliches Material nach dem Oberbegriff von Anspruch 1 bzw. Anspruch 11.

Die konventionelle Fotografie auf der Basis von Silberhalogenidfilm wird sowohl aufnahmeseitig, z. B. bei Kameras, als auch im Zuge der späteren Verarbeitung des Films zunehmend durch elektronische Komponenten ergänzt bzw. ersetzt. Beispielsweise können in modernen Kameras ohne weiteres zusätzliche Informationen wie Aufnahmedatum, Grußtexte oder sonstige Informationen bildbezogen auf den Film aufgezeichnet werden. In diesem Zusammenhang wurden seit einiger Zeit auch Filme bekannt, die eine magnetische Aufzeichnungsschicht tragen, über die die Information von der Kamera auf den Film für spätere Verarbeitungsschritte des Films zur Verfügung gestellt wird. Ein derartiger Film und eine entsprechende Verarbeitungsprozedur ist z. B. aus der US-PS 5,029,313 bekanntgeworden.

Des Weiteren ist es häufig gewünscht, zusätzliche Informationen wie Grußtexte im Zuge der späteren Verarbeitung, d. h. nach dem fotografischen Entwickeln des Films, auf oder neben die davon erstellten Fotoabzüge zu drucken. Immer häufiger wird auch gewünscht, Bilder in fotografischer Qualität direkt von einer elektronischen Bildquelle - z. B. von einem elektronischen Speicher, wie er in digitalen Kameras verwendet wird, einem Computer oder einem Vorlagenscanner - auf Fotomaterial auszugeben.

Um all diese Anforderungen zu erfüllen, wird eine Vorrichtung benötigt, mit der digitale Bilddaten auf lichtempfindliches Material aufbelichtet werden können. Aus der WO 02/02342 A1 ist eine entsprechende Vorrichtung bekannt geworden, die die Bilder mit Hilfe eines Liquid-Crystal-Displays (LCD) erzeugt. Das LCD befindet sich in einem Projektionsstrahlengang mit einem Objektiv und einer mehrfarbigen Lichtquelle. Es werden nacheinander in dem LCD die verschiedenen Farbauszüge erzeugt und mit Licht der entsprechenden Farbe auf das Fotopapier belichtet.

Ein LCD besteht aus zwei Elektroden, zwischen denen sich eine sehr dünne Schicht des Flüssigkristalls befindet. Liegt an diesen Elektroden für längere Zeit eine bestimmte Spannung an, so kann es zu einem Elektrolysevorgang kommen. Hierdurch werden die Eigenschaften des Flüssigkristalls beeinflusst, so dass sein Verhalten bei einer bestimmten angelegten Spannung nicht mehr reproduzierbar ist. Aus diesem Grunde werden heute solche LCDs mit einer Wechselspannung angesteuert. Durch das häufige Umschalten der Spannungsrichtung können Elektrolyseerscheinungen sicher verhindert werden.

Es hat sich jedoch herausgestellt, dass die Eigenschaften eines Flüssigkristalls von der Spannungsrichtung abhängen, also bei angelegter negativer Spannung einen anderen Einfluss auf das Licht im Projektionsstrahlengang ausüben als bei angelegter positiver Spannung. Dieser Unterschied wirkt sich bei langen Belichtungszeiten praktisch nicht aus, kommt aber bei Belichtungszeiten zum Tragen, deren Länge im Bereich einiger Perioden der angelegten Wechselspannung liegt.

Es war daher die Aufgabe der Erfindung, ein Verfahren und eine Vorrichtung zum Aufbelichten von Bildinformationen auf lichtempfindliches Material so auszugestalten, dass diese Unterschiede kompensiert werden können und die Belichtung so zu steuern, dass auch bei Verwendung einer Wechselspannung ein reproduzierbares Ergebnis erreichbar ist.

Gelöst wird die Aufgabe durch ein Verfahren und eine Vorrichtung mit den kennzeichnenden Merkmalen von Anspruch 1 bzw. Anspruch 11. Durch das gleichmäßige Aufteilen der notwendigen Belichtungszeit auf die Perioden, in denen eine negative Ansteuerspannung anliegt (negative Halbperiode) und die Perioden, in denen eine positive Ansteuerspannung anliegt (positive Halbperiode), wird sichergestellt, dass bei jeder Belichtung das gleiche Verhältnis zwischen den Zeiten mit positiver Spannung und den Zeiten mit negativer Spannung herrscht. Die unterschiedlichen Eigenschaften des LCDs in den negativen und positiven Ansteuerperioden werden auf diese Weise kompensiert, unabhängig davon wie groß diese Unterschiede sind.

Das richtige Aufbelichten von Bildinformationen hängt grundsätzlich von der Lichtleistung und der Belichtungszeit ab. Bei einer Ausführungsform der Erfindung wird die Belichtungszeit so gewählt, dass sie ein ganzzahliges Vielfaches der Zeit darstellt, die bei einer negativen und einer positiven Periode der Ansteuerspannung verstreicht. Die Lichtleistung wird an diese Belichtungszeit entsprechend angepasst. Durch diese Steuerung ist gewährleistet, dass während einer Belichtung das LCD immer mit der gleichen Anzahl positiver wie negativer Perioden der anliegenden Wechselspannung angesteuert wird.

Bei einer weiteren Ausführungsform der Erfindung wird dies nicht durch die Anpassung der Lichtleistung erreicht, sondern durch die Anpassung der Periodendauer der angelegten Wechselspannung. Dadurch lassen sich Lichtleistung und Belichtungszeit vollkommen unabhängig festlegen; es muss lediglich die anliegende Wechselspannung so verändert werden, dass die Belichtungszeit wiederum ein ganzzahliges Vielfaches der Dauer einer negativen und einer positiven Periode der Ansteuerspannung darstellt.

Bei einer bevorzugten Ausführungsform der Erfindung können Belichtungszeit und Lichtleistung ebenfalls unabhängig von der Ansteuerspannung gewählt werden. Aber auch die Frequenz der Ansteuerspannung muss nicht angepasst werden. Zu diesem Zweck muss die Belichtung an beliebiger Stelle unterbrochen werden. Beträgt die ermittelte Belichtungszeit beispielsweise zweieinhalb Perioden positiver und zweieinhalb Perioden negativer Ansteuerspannung und wird die Belichtung mit dem Beginn einer negativen Periode gestartet, so kann die Belichtung nach Ablauf dieser negativen Periode, der folgenden positiven Periode und der nächsten halben negativen Periode unterbrochen werden. Bis zu dieser Unterbrechnung wurden folglich eineinhalb negative und eine positive Periode lang belichtet. Die Belichtung lässt sich nach dem Ablauf der zweiten Hälfte dieser negativen Periode und der nächsten halben positiven Periode erneut starten und nach Ablauf der zweiten Hälfte dieser positiven Periode, der folgenden negativen Periode und der darauf folgenden positiven Periode beenden. Während dieser zweiten Teilbelichtung wurden dann eineinhalb positive und eine negative Periode belichtet. In Summe ergeben sich daraus die vorher ermittelten zweieinhalb negativen und zweieinhalb positiven Perioden.

Bevorzugt wird die Belichtung bei obigem Beispiel jedoch erst nach dem Ablauf von zwei positiven und zweieinhalb negativen Perioden unterbrochen. Mit dem Beginn der folgenden positiven Periode wird die Belichtung wieder für die Dauer einer halben positiven Periode weitergeführt und danach beendet. Auf diese Weise beträgt die Belichtungspause lediglich eine halbe Periode, wodurch die Gesamtbelichtungszeit möglichst kurz gehalten werden kann.

Insbesondere LED-Lichtquellen verändern sich mit der Temperatur. Es kann folglich nicht davon ausgegangen werden, dass bei gleicher Belichtungszeit auch immer die gleiche Lichtmenge auf das lichtempfindliche Material aufbelichtet wird. Erfindungsgemäß wird daher die Lichtleistung der Lichtquelle ständig gemessen und die ursprünglich bestimmte Belichtungszeit noch während der Belichtung entsprechend korrigiert. Bei dem zuerst beschriebenen Ausführungsbeispiel der Erfindung, bei dem die Belichtungsleistung gesteuert wird, muss diese während der Belichtung nachgeregelt werden. Bei der zweiten Ausführungsform, bei der die Frequenz der Wechselspannung geregelt wird, muss diese Frequenz während der Belichtung an eine sich eventuell ändernde Lichtleistung angepasst werden.

Bevorzugt wird zur Messung der Lichtleistung ein Intensitäts-Frequenz-Wandler verwendet. In Wandlern dieser Art ist eine Fotodiode mit einem Strom-Frequenz-Wandler kombiniert. Das Ausgangssignal dieses Wandlers besteht aus gleichen Spannungsimpulsen, deren Abstand von der gemessenen Lichtintensität abhängt. Die Lichtleistung der Lichtquelle ist damit proportional zur Frequenz des Ausgangssignals des Intensitäts-Frequenz-Wandlers.

Bei einem besonders bevorzugten Ausführungsbeispiel der Erfindung wird die für die Belichtung notwendige Lichtmenge als Anzahl der Ausgangsimpulse des Intensitäts-Frequenz-Wandlers festgelegt. Diese Impulszahl wird nun gleichmäßig auf Perioden mit negativer und Perioden mit positiver Ansteuerspannung aufgeteilt. Während der Belichtung werden nun die Impulse des Intensitäts-Frequenz-Wandlers gezählt und - abhängig davon, ob sich die Belichtung gerade in einer positiven oder einer negativen Ansteuerperiode befindet - von der zuvor den negativen und positiven Perioden zugeordneten Anzahl von Impulsen abgezogen. Sobald eine der Mengen aufgebraucht ist, wird die Belichtung unterbrochen und erst mit dem Beginn der nächsten Ansteuerperiode wieder fortgesetzt. Während dieser nächsten Periode verbraucht sich auch die zweite Menge, so dass die Belichtung beendet werden kann. Auf diese Weise ist sichergestellt, dass auch bei einer Veränderung der Lichtleistung während der Belichtung die Belichtungszeit gleichmäßig auf die Perioden negativer und positiver Ansteuerspannung aufgeteilt wird.

Selbstverständlich kann auch hier die Belichtungspause an anderer Stelle eingefügt werden, es muss lediglich sichergestellt werden, dass während der entsprechenden Ansteuerperioden die gemessenen Impulse im Ausgangssignal des Intensitäts-Frequenz-Wandlers immer von der der entsprechenden Periode zugeordneten Anzahl abgezählt werden. Ebenso muss die Belichtung nicht notwendigerweise am Anfang einer Periode begonnen werden. Dies gilt für alle beschriebenen Ausführungsbeispiele.

Weitere Merkmale und Vorteile der Erfindung ergeben sich aus der folgenden Beschreibung bevorzugter Ausführungsformen und Anwendungsbeispiele, wobei Bezug auf die beigefügten Zeichnungen genommen wird.

Es zeigen:
- Fig. 1: eine schematische Darstellung einer erfindungsgemäßen Vorrichtung,
- Fig. 2: die Ansteuerspannung im Vergleich mit der Belichtung und
- Fig. 3: das Schaltbild eines Intensitäts-Frequenz-Wandlers

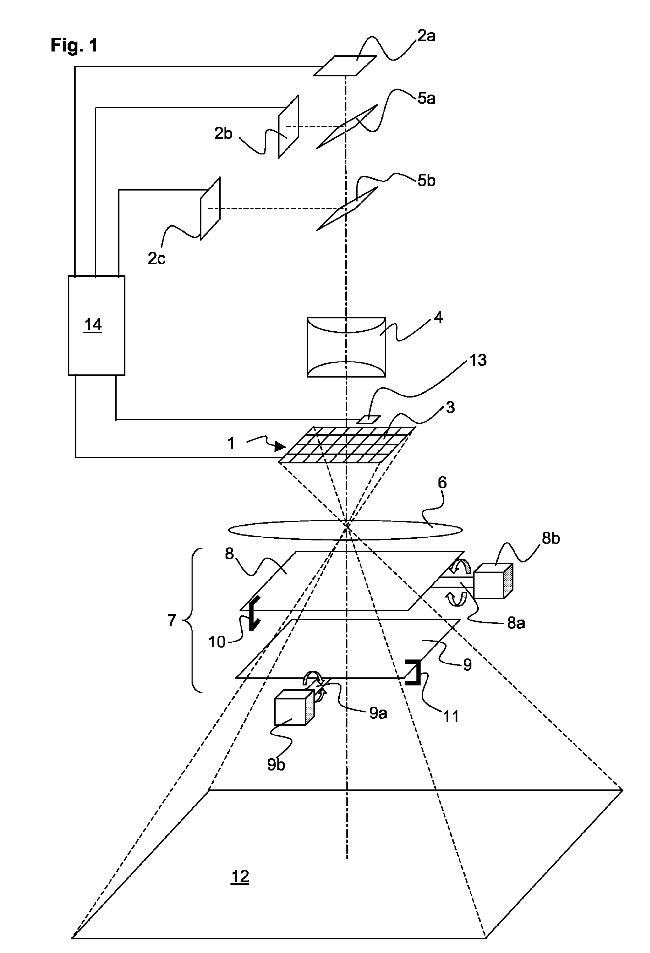

In Fig. 1 ist teilweise perspektivisch der Aufbau der Abbildungsoptik gezeigt, die zur Abbildung einer LCD-Darstellung auf ein lichtempfindliches Material verwendet wird. Zur Orientierung ist die optische Achse als strichpunktierte Linie gezeigt.

Mit einem LCD 1 wird ein Muster dargestellt, das mit einer Lichtquelle 2, 5 belichtet wird. Das Muster auf dem LCD 1 wird mit einzelnen LCD-Elementen 3 (Pixelgeneratoren) erzeugt, die einzeln ansteuerbar und in nicht dargestellter Weise mit einer Maske zum Teil abgedeckt sind. Um die Auflösung der Abbildung gegenüber der Auflösung des verwendeten LCD 1 zu vervierfachen, ist jedes LCD-Element 3 von der Maske zu einem Dreiviertel seiner Fläche abgedeckt.

Das Licht der Lichtquelle 2, 5 wird durch den Kondensor 4 parallelisiert, so dass das LCD mit hartem Licht beaufschlagt werden kann.

Das für die Abbildung notwendige farbige Licht wird mit LEDs erzeugt. Es spielt hierbei keine Rolle ob ein gemischtfarbiges LED-Array verwendet wird oder ob das Licht mehrerer verschiedenfarbiger LED-Arrays in dem Strahlengang vereinigt wird. In dem gezeigten Ausführungsbeispiel sind drei LED-Arrays 2a-c für Licht in den Farben Rot, Grün und Blau vorgesehen. Das emittierte Licht wird über die Spiegel 5a und b in einem Strahlengang vereinigt. Die verschiedenfarbigen LED-Arrays 2a-c lassen sich über die Steuerung 14 selektiv ansteuern.

In dem Strahlengang ist weiterhin ein Intensitäts-Frequenz-Wandler 13 vorgesehen, der mit der Steuerung 14 verbunden ist und an diese Impulse liefert, deren Frequenz proportional zur detektierten Lichtleistung ist.

Das LCD 1 ist ebenfalls mit der Steuerung 14 verbunden und wird über diese angesteuert. Durch eine Abbildungsoptik 6 wird das auf dem LCD 1 erzeugte Muster auf das Fotopapier 12 abgebildet.

Zwischen der Abbildungsoptik 6 und der lichtempfindlichen Schicht des Fotopapiers 12 ist eine Einrichtung 7 zum seitlichen Versetzen des Abbildes der einzelnen LCD-Elemente 3 angeordnet.

Die Einrichtung 7 umfasst zwei schwenkbare planparallele Glasplatten 8 und 9. Die beiden Glasplatten 8 und 9 sind im Strahlengang hintereinander zwischen der Abbildungsoptik 6 und der Bildebene, in der sich die lichtempfindliche Schicht des Fotopapiers 12 befindet, angeordnet.

Die Glasplatten 8 bzw. 9 sorgen dafür, dass der Strahlengang je nach Stellung des optischen Elements definiert parallel versetzt wird. Das bedeutet, dass das Abbild eines jeden LCD-Elements 3 in der Ebene des Fotopapiers 12 in einem größeren Bereich um eine beliebige Strecke mit beliebigem Winkel verschoben werden kann. Dies lässt sich durch das Kippen der beiden planparallelen Glasplatten 8 und 9 erreichen. Während die Stellung der Glasplatte 8 für den Anteil der Verschiebung in y-Richtung verantwortlich ist, bewirkt das Kippen der Glasplatte 9 eine Verschiebung in x-Richtung. Durch die Kombination unterschiedlicher Kippwinkel der beiden Glasplatten lässt sich folglich jede beliebige Verschiebung realisieren.

Die beiden Glasplatten 8 und 9 sind schwenkbar gelagert und werden durch Antriebseinrichtungen 8b und 9b um ihre jeweilige Schwenkachse gekippt. Die Schwenkachsen sind mit 8a bzw. 9a bezeichnet.

Da die Bildelemente des LCD 1 eine rechteckige Fläche haben, liegen die Schwenkachsen 8a und 9a parallel zu den Grundlinien der LCD-Elemente 3 und sind rechtwinklig zueinander ausgerichtet. Um eine Verzeichnung zu verhindern, sind die Schwenkachsen 8a und 9a in zueinander parallelen Ebenen angeordnet, die von der optischen Achse des Strahlengangs im rechten Winkel geschnitten werden. Beide Schwenkachsen schneiden diese optische Achse.

Der Kippwinkel der optischen Elemente 8 und 9 wird durch ein Paar von Anschlägen 10 bzw. 11 vorgegeben. Der so definierte Verstellwinkel liegt je nach Gegebenheiten etwa im Bereich zwischen 1° und 10°.

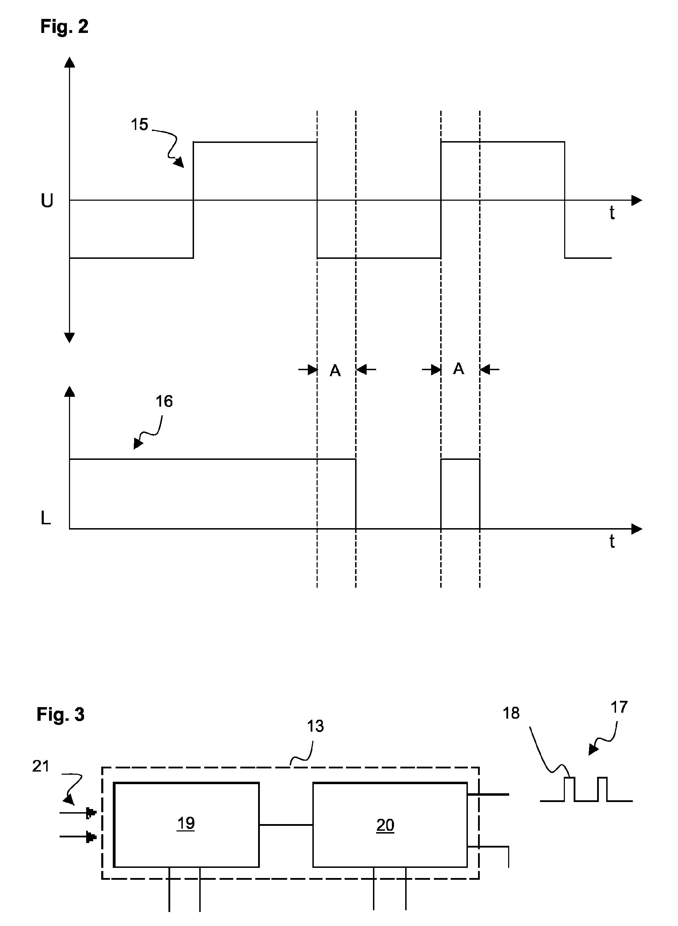

In Fig. 2 ist der zeitliche Verlauf der Ansteuerspannung für das LCD 1 dem Verlauf der Belichtungsleistung gegenübergestellt. Die Ansteuerspannung ist mit dem Bezugszeichen 15 versehen, die Belichtungsleistung ist mit 16 bezeichnet.

Die Belichtungszeit soll bei dem hier gezeigten Beispiel etwa 1,3 Vollperioden betragen, wobei eine Voll periode aus einer negativen und einer positiven Periode besteht. Der Belichtungsvorgang startet mit dem Beginn einer negativen Periode und wird nach der Dauer von einer negativen Periode (1. Halbperiode), der fdgenden positiven Periode (2. Halbperiode) und einem Teil A der nächsten negativen Periode unterbrochen. Dieser Teil A entspricht der Dauer von 0,3Halbperioden. Beim Beginn der nächsten positiven Periode wird die Belichtung nochmals für die Dauer von 0,3 Halbperioden gestartet und danach beendet. Dieser auf eine positive Periode fallende Teil A entspricht in seiner Dauer genau dem Teil A während der vorhergehenden negativen Periode.

Fig. 3 zeigt den Aufbau eines Intensitäts-Frequenz-Wandlers. Das Licht 21 trifft auf die Fotodiode 19. Das Ausgangssignal der Fotodiode wird in dem Impulskonverter 20 in einzelne Impulse 18 umgewandelt. Die Frequenz des Ausgangssignals 17 des Intensitäts-Frequenz-Wandlers 13 ist damit direkt von der Belichtungsleistung der Lichtquelle 2, 5 abhängig.

Vor dem Beginn einer Belichtung wird die benötigte Lichtmenge durch ein hier nicht näher beschriebenes Verfahren ermittelt. Diese Lichtmenge kann direkt in eine Anzahl Impule 18 des Ausgangssignals 17 des Intensitäts-Frequenz-Wandlers 13 umgerechnet werden. Diese Anzahl wird nun durch zwei geteilt und in zwei Speichern der Steuerung 14 abgelegt, wobei ein Speicher den negativen Perioden (Negativspeicher) und ein Speicher den positiven Perioden (Positivspeicher) zugeordnet ist.

Sobald der Belichtungsvorgang beginnt (hier mit einer negativen Periode der Ansteuerspannung für das LCD 1, wie in Fig. 2 dargestellt), beginnt ein Zähler in der Steuerung 14 die Impulse 18 im Ausgangssignal 17 zu zählen. Die gezählten Impulse werden von der im Negativspeicher festgehaltenen Anzahl abgezogen. Beim Beginn der positiven Periode schaltet der Zähler um und zieht die gezählten Impulse von der im Positivspeicher festgehaltenen Anzahl ab.

In dem in Fig. 2 gezeigten Beispiel ist der Negativspeicher im Verlauf der zweiten Negativ-Periode leer. In diesem Augenblick wird die Belichtung unterbrochen. Mit dem Beginn der nächsten Positiv-Periode wird die Belichtung fortgesetzt bis auch der Positivspeicher leer ist und danach beendet.

Um mit der in Fig. 1 gezeigten Vorrichtung eine hohe Auflösung des auf dem Fotopapier erzeugten Bildes zu erreichen, werden für jede Farbe 4 Teilbilder aufbelichtet. Der oben beschriebene Belichtungsvorgang wird folglich für jedes Bild zwölfmal durchgeführt.

## Patentansprüche

1. Verfahren zum Aufbelichten von Bildinformationen auf lichtempfindliches Material mit wenigstens einem Pixelgenerator zum Erzeugen von Bildpunkten auf dem lichtempfindlichen Material, wobei für die zu erzeugenden Bildpunkte eine bestimmte Lichtleistung über die Dauer einer bestimmten Belichtungszeit aufbelichtet wird und wobei jeder Pixelgenerator mit einer Wechselspannung angesteuert wird, die für eine bestimmte Periode eine negative Spannung und für eine weitere gleich lange Periode eine positive Spannung gleicher Amplitude liefert,
**dadurch gekennzeichnet,**
**dass** die Belichtungszeit für jeden Bildpunkt gleichmäßig auf die Perioden negativer und positiver Spannung verteilt wird.

2. Verfahren nach Anspruch 1, **dadurch gekennzeichnet, dass** die Belichtungsleistung für die zu erzeugenden Bildpunkt so gewählt wird, dass die Belichtungszeit ein ganzzahliges Vielfaches der Summe aus der Periode mit negativer Spannung und der Periode mit positiver Spannung ergibt.

3. Verfahren nach Anspruch 1, **dadurch gekennzeichnet, dass** die Periodendauer der Ansteuerspannung so gewählt wird, dass die Belichtungszeit ein ganzzahliges Vielfaches der Summe aus der Periode mit negativer Spannung und der Periode mit positiver Spannung ergibt.

4. Verfahren nach Anspruch 1, **dadurch gekennzeichnet, dass** die bestimmte Belichtungszeit in wenigstens zwei Teilbelichtungszeiten unterteilt wird und die zu erzeugenden Bildpunkte mit wenigstens einer Belichtungspause zwischen den Teilbelichtungen aufbelichtet werden.

5. Verfahren nach Anspruch 4, **dadurch gekennzeichnet, dass** die Belichtungspause innerhalb einer Periode mit negativer und positiver Ansteuerspannung beginnt und mit dem Beginn der nächsten Periode endet.

6. Verfahren nach einem der Ansprüche 1 bis 5, **dadurch gekennzeichnet, dass** die Belichtungsleistung während der Belichtung gemessen wird und die Belichtungsleistung und/oder die Belichtungszeit und/oder die Dauer der Perioden mit negativer und positiver Ansteuerspannung entsprechend angepasst werden.

7. Verfahren nach Anspruch 6, **dadurch gekennzeichnet, dass** zum Messen der Belichtungsleistung ein Intensitäts-Frequenz-Wandler verwendet wird, dessen Ausgangssignal aus zählbaren Impulsen besteht, deren zeitlicher Abstand ein Maß für die Belichtungsleistung darstellt.

8. Verfahren nach Anspruch 7, **dadurch gekennzeichnet, dass** die für das Aufbelichten benötigte Lichtmenge in Form einer Anzahl von Impulsen ermittelt und diese Anzahl in zwei gleiche Mengen aufgeteilt wird, wobei eine erste Menge den Perioden mit negativer Ansteuerspannung und eine zweite Menge den Perioden mit positiver Ansteuerspannung zugeordnet werden und dass die im Ausgangssignal des Intensitäts-Frequenz-Wandlers gezählten Impulse während der Periode mit negativer Ansteuerspannung von der ersten Menge und während der Periode mit positiver Ansteuerspannung von der zweiten Menge abgezogen werden.

9. Verfahren nach Anspruch 8, **dadurch gekennzeichnet, dass** das Aufbelichten unterbrochen wird, wenn die der momentan aktiven Periode zugeordnete Menge leer ist bevor diese Periode beendet ist und die Aufbelichtung wieder aufgenommen wird, sobald die nächste Periode beginnt.

10. Verfahren nach Anspruch 9, **dadurch gekennzeichnet, dass** das Aufbelichten beendet wird, wenn die erste und die zweite Menge leer sind.

11. Vorrichtung zum Aufbelichten von Bildinformationen auf lichtempfindliches Material mit wenigstens einem Pixelgenerator zum Erzeugen von Bildpunkten auf dem lichtempfindlichen Material, der zum Erzeugen der Bildpunkte eine bestimmte Lichtleistung über die Dauer einer bestimmten Belichtungszeit aufbelichtet und mit einer Steuereinrichtung, die jeden Pixelgenerator mit einer Wechselspannung ansteuert, die für eine bestimmte Periode eine negative Spannung und für eine weitere gleich lange Periode eine positive Spannung gleicher Amplitude liefert,
**dadurch gekennzeichnet,**
**dass** die Steuereinrichtung so aufgebaut ist, dass eine Lichtquelle derart schaltbar ist, dass sich die Belichtungszeit für jeden Bildpunkt gleichmäßig auf die Perioden negativer und positiver Spannung verteilt.

12. Vorrichtung nach Anspruch 11, **dadurch gekennzeichnet, dass** ein LCD-Array mit einer Vielzahl von in Zeilen und Spalten angeordneten Pixelgeneratoren verwendet wird.

13. Vorrichtung nach Anspruch 12, **dadurch gekennzeichnet, dass** die Lichtquelle eine Vielzahl verschiedenfarbiger, getrennt ansteuerbarer LEDs aufweist.

14. Vorrichtung nach Anspruch 13, **dadurch gekennzeichnet, dass** ein Sensor zum Ermitteln der aufbelichteten Lichtmenge vorgesehen ist.

15. Vorrichtung nach Anspruch 14, **dadurch gekennzeichnet, dass** der Sensor als Intensitäts-Frequenz-Wandler geschaltet ist.

16. Vorrichtung nach Anspruch 15, **dadurch gekennzeichnet, dass** ein Zähler zum Zählen der Impulse im Ausgangssignal des Sensors vorgesehen ist.
